# EUROPEAN PATENT APPLICATION

(11) **EP 4 729 411 A1**
(43) Date of publication of application: **22.04.2026**
(21) Application number: 25184754.7
(22) Date of filing: 24.06.2025
(51) Int. Cl.: B64C 13/30, F16H 21/04, F16H 21/44

(54) **A POWER TRANSMISSION MECHANISM**

(30) Priority: 15.10.2024 TR 2024013992
(71) Applicant: Tusas- Turk Havacilik Ve Uzay Sanayii Anonim Sirketi, 06980 Ankara (TR)
(72) Inventor: YUCESAN, ALISAN, 06980 ANKARA (TR)
(74) Representative: Berkkam, Ayfer

(57) **Abstract**

The present invention comprises a body (G), a trigger (A) disposed on the body (G) which generates force and/or power, multiple output components (O) disposed on the body (G) to which the force and/or power generated by the trigger (A) is transferred, a trigger shaft (2) suitable for transferring the force and/or power generated by the trigger (A), an output shaft (3) suitable for transferring the force generated by the trigger (A) to the output component (O) by means of the trigger shaft (2), at least one rotary arm (4) which is a structural part for transferring force and/or power between the trigger shaft (2) and the output shaft (3), at least one guide (5) located on the body (G) and having a groove therein so as to allow the trigger shaft (2) to move freely in linear direction.

## Description

The present invention relates to a mechanism for efficient power transmission to control surfaces used in aircraft.

In the state of the art, a bellcrank is generally used in existing structures for the differential movement of the right and left aileron in aircraft. Differential movement is a type of movement in which the direction of force is changed. The bellcrank first converts the linear motion from the joystick into rotary motion and then converts the rotary motion back into linear motion. The transformation of the rotary motion into linear motion causes out of plane forces and/or torques on the bellcrank mounted on the wing and thus on the wing spar. These loads are an obstacle to the design of systems that require a greater range of motion in the bellcranks.

In the patent document originating in the United States of America numbered US9255631 B2, which is included in the state of the art, an apparatus for transmitting control force is mentioned. The transmission device has a first and second force transmission point and a connection unit disposed between them. The connection unit has a first and second side member and a connecting element. The first and second side members are each connected to the first force transmission point and the connecting member. The first side member has a member for changing the length of the side member. The second force transmission point is located on the connecting member and is adjustable at least between the first and second position. A guide member is provided on the connecting member and the connecting member is movably held relative to the guide member between the first position and the second position. The control rods are held in a linear guide so as to be movable in the direction of the rod.

In the patent document originating in the United States of America numbered US9586675, which is included in the state of the art, the apparatus and method for stopping the flight control surface are mentioned. The secondary actuation mechanism for stopping the movement of the control surface includes a secondary actuator, a drive linkage connected to the secondary actuator, and a secondary connecting rod connected between the drive linkage and the control surface. The control surface is positioned in response to actuation of the moveable secondary actuator according to a default value, and the secondary actuator maintains the control surface in the default position. The motion control feature includes a gap defined between the second end of the first drive linkage and the second end of the second drive linkage.

Thanks to a power transmission mechanism developed with this invention, only the direction of the linear motion is changed, preventing the generation of out-of-plane force and/or torque, and the structure is subjected to less stress.

Another object of the invention is to enable two or more mechanical outputs to be triggered simultaneously by a single mechanical input.

A further object of the invention is to ensure that the two output shafts move in opposite directions.

Another object of the invention is to enable the design of power transmission mechanisms which should be both compact and have a wide range of movement.

The power transmission mechanism defined in the first claim and the claims dependent upon it, which are realised to achieve the object of the invention, comprises a body. The body may be a fixed part on the aircraft. The trigger may be a motor or a motor that can be manually generated by the pilot. The force and/or power generated by the trigger is transferred to the output component. There is a power output component configured to transfer the force and/or power generated by the trigger. The trigger shaft is a longitudinal cylindrical shaft which transfers force and/or moment between the ends to which it is connected. One end of the trigger shaft is connected to the trigger. The output shaft is a longitudinal cylindrical shaft which transfers force and/or moment between the ends to which it is connected. One end of the output shaft is connected to the output component. One end of the rotary arm is connected to the trigger shaft and the other end is connected to the output shaft and transfers the force and/or moment transferred from the trigger shaft to the output shaft. The guide is located on the body and has a channel in the form of an opening. In the preferably linear channel in the guide, the trigger shaft is located, the guide thus restricts the degree of freedom of the trigger shaft and limits the shaft spatially. There is a mounting relationship between the trigger shaft and the guide, which allows the trigger shaft to move freely along the linear direction. The trigger shaft can move in the vertical axis, which is the up and down direction.

The inventive power transmission mechanism comprises more than one output shaft. The output shafts are arranged in pairs in opposite directions to each other. Each pair of output shafts is not coaxial with each other, but in different directions relative to each other. These directions are the directions in which the force and/or moment is intended to be transmitted by the manufacturer. The guide has extensions for each output shaft, and each output shaft is supported by the guide. The output shafts are located in the guides, and there are as many guide extensions with grooves in them as there are output shafts. Each output shaft can move freely within the grooves in the guide extensions. One end of the rotary arm is connected to the trigger shaft and the other to the output shaft. Both ends of the rotary arm are connected in the form of a rotary joint. The rotary arm moves rotatably around the connection element to which it is connected to the trigger shaft and output shaft. The linear movement of the trigger shaft in the up and down direction is transferred to the output shaft in any direction other than the up and down direction. Force and/or moment transfer is realised along the directions along which the output shafts extend. In this way, from the output shaft, which can move linearly in a single direction, the force and/or moment transfer of more than one output shaft in the directions predetermined by the manufacturer and different from the trigger shaft is provided.

In one embodiment of the invention, the power transmission mechanism comprises a first output component. The first output component is an output component located on the body. The power transmission mechanism comprises a second output component. The second output component is another output component located on the body, remote from the first output component and facing each other with the first output component. The powertrain comprises a first output shaft. The first output shaft is an output shaft that transfers the force generated by the trigger to the first output component via the trigger shaft. One end of the first output shaft is connected to the first output component. The power transmission mechanism comprises a second output shaft. The second output shaft is another output shaft on the body, remote from the first output shaft and facing each other with the first output shaft, which transfers the force generated by the trigger to the second output component via the trigger shaft. One end of the second output shaft is connected to the second output component. The power transmission mechanism comprises a guide base. The guide base is the substantially flat plate-like portion above the guide, with the limbs of the guide extending outwardly from the guide base. The powertrain includes the trigger guide. The trigger guide extends outwards from the guide base. Inside the trigger guide, the trigger shaft is allowed to move freely linearly and rotate. The power transmission mechanism comprises an output first guide. The output first guide extends outwards from the guide base. Within the output first guide, the first output component is allowed to move and rotate freely linearly. The output first guide is located away from the trigger guide and extends in a direction different from the direction in which the trigger guide extends. The power transmission mechanism comprises the output second guide. The output second guide extends outwards from the base of the guide. Within the output second guide, the second output component is allowed to move freely linearly and rotate. The output second guide is positioned away from the output first guide and faces each other with the output first guide. The power transmission mechanism comprises a first rotary arm and a second rotary arm. At least one end of the first rotary arm and the second rotary arm in the direction along which they extend are mounted so as to be freely rotatable about the end to which they are connected.

In one embodiment of the invention, the power transmission mechanism comprises a reversible shaft. The reversible shaft is located in the same vertical direction, which is the up and down direction, as the longitudinal direction along which the trigger shaft extends, and is remote from the trigger shaft. The power transmission mechanism comprises a reversible shaft guide. The reversible shaft guide extends outwards from the base of the guide, in which the reversible shaft can move freely in a linear direction, is located away from the trigger guide and faces the trigger guide almost towards each other, and is located on the vertical direction up and down along which the trigger guide extends. The power transmission mechanism comprises a translational lever. One end of the translational arm is connected to the trigger shaft and the other end is connected to the reversible shaft. The translational arm extends along its length, allowing the linear movement of the trigger shaft to be transferred to the reversible shaft in the same direction. The power transmission mechanism comprises a first rotary arm. One of the ends to which the first rotary arm is connected is mounted on the trigger shaft and the other is mounted on the first output shaft. The power transmission mechanism includes the second rotary arm. One of the ends to which the second rotary arm is connected is mounted on the reversible shaft and the other end is mounted on the second output shaft, so that the first output shaft and the second output shaft move simultaneously to the left side or to the right side at the same time, regardless of the distance between them in the longitudinal direction.

In one embodiment of the invention, the power transmission mechanism comprises a rotary arm. One end of the first rotary arm and the second rotary arm is connected to the trigger shaft in common, while the other end is connected to the first output shaft and the second output shaft respectively. Thanks to this configuration, when the trigger shaft moves, the first output shaft and the second output shaft are allowed to move closer to or further away from each other in the direction in which they extend along their length.

In one embodiment of the invention, the power transmission mechanism comprises an output first guide and an output second guide. The output first guide and the output second guide may extend substantially perpendicularly to the trigger guide, which may be in different planes. The first output shaft and the second output shaft extend substantially perpendicularly to the trigger shaft, which may be in different planes. In this way, the system can be used in areas of limited volume where compactness is required, and the force transmission components of the system in different directions to the body can be changed.

In one embodiment of the invention, the power transmission mechanism comprises an output first guide and an output second guide. The output first guide and the output second guide extend perpendicularly to the trigger guide so as to be planar. The first output shaft and the second output shaft extend perpendicular to the trigger shaft so as to be planar.

In one embodiment of the invention, the power transmission mechanism comprises a trigger shaft, an output shaft and reversible shafts in hollow cylindrical form. The inner wall of the trigger shaft, the output shaft and the reversible shaft has an internal thread group in the form of a helical recess. There is a first internal thread, which is an internal thread located on the inner wall of the trigger shaft and the reversible shaft. The first output shaft and the second internal thread, which is the internal thread on the inner wall of the second output shaft. An adjusting pin, which has an almost cylindrical form, is provided on the translation arm, extending outwardly from the end portions of the translational arm in the direction in which the translational arm extends along its length. On the adjusting pins, there is a first external thread, which is located as a helix-shaped recess on the outer wall of the adjusting pins. By rotating the translational arm around its axis, the first external threads are moved within the first internal threads, so that the length of the translational arm in the vertical axis in the trigger shaft and reversible shaft can be changed.

In one embodiment of the invention, the power transmission mechanism comprises a plurality of holes. The bores are arranged as cylindrical openings along the thickness direction of the rotary arm in a longitudinal cylindrical form at the ends of the rotary arm close to the trigger shaft and the output shaft. There is at least one tie rod end in the power transmission mechanism. The tie rod end is a rod end joint and is attached to the second inner thread by rotation. There is a coupler in the power transmission mechanism. The coupler is passed through the bore and the tie rod end. The coupler is attached to the bore. The tie rod end can rotate around the coupler in the direction along which the bore extends. The power transmission mechanism is provided with at least one castle nut. The castle nut is attached to the coupler at the other end of the coupler with respect to the head of the coupler. The coupler is mounted on the rotary arm by inserting a cotter pin into the castle nut in the direction along which the coupler extends. The swivel arm has double-armed plate-like extensions so as to encircle the trigger shaft and the output shaft at the ends to which they are connected.

In one embodiment of the invention, the power transmission mechanism comprises a rolling position (I). By rotating the first output component and the second output component in opposite directions relative to each other, the body is brought into the roll position (I) and the body on the aircraft is at a roll angle other than zero degrees. The power transmission mechanism comprises a neutral position (II). In the neutral position (II), the body on the aircraft is at zero-degree roll angle and does not perform any rolling movement. The first output component and the second output component are at zero degrees and at the same roll angle. When the body moves from the rolling position (I) to the neutral position (II), the first rotary arm moves away from the trigger according to the rolling position (I) and approaches towards the first output component. When the body moves from the rolling position (I) to the neutral position (II), the second rotary arm moves away from the trigger according to the rolling position (I) and away from the second output component. The power transmission mechanism includes a reverse rolling position (III). When the body moves from the neutral position (II) to the reverse roll position (III), the first output component and the second output component rotate at opposite angles to each other to move the body on the aircraft in the direction opposite to the direction of the rolling motion predetermined by the manufacturer, which is clockwise or anti-clockwise in the rolling position (I). The rotary arm has an eccentric geometry. The rotary arm extends in the form of an arc, which is not straight and sweeps a radius predetermined by the manufacturer, so that the rotary arm can move continuously between the rolling position (I) and the reverse rolling position (III) without hitting the trigger guide, the output first guide, the output second guide and the reversible shaft guide.

In one embodiment of the invention, the power transmission mechanism comprises a trigger opening. The trigger opening is arranged as a channel along a vertical axis representing an up and down direction on the trigger guide. A trigger shaft passes through the trigger opening. The trigger opening is arranged in a mounting relationship with the trigger shaft, which allows the trigger shaft to be movably disposed. The power transmission mechanism comprises an output first opening. The output first opening is located on the output first guide as a channel along the horizontal axis representing the left and right direction. A first output shaft passes through the output first opening. The output first opening is arranged in a mounting relationship with the first output shaft, which allows the first output shaft to be movably disposed. The powertrain comprises a reversible shaft opening. The reversible shaft opening is located on the reversible shaft guide as a channel along the vertical axis representing the up and down direction. A reversible shaft passes through the reversible shaft opening. The reversible shaft opening is located in a mounting relationship with the reversible shaft, which allows the reversible shaft to be movably located. The powertrain comprises an output second opening. The output second opening is arranged as a channel along the horizontal axis representing the left and right direction on the output second guide. A second output shaft passes through the output second opening. The output second opening is arranged in a mounting relationship with the second output shaft, which allows the second output shaft to be movably disposed.

In one embodiment of the invention, the power transmission mechanism comprises a spherical bearing having a spherical joint freely rotatable about a point. The spherical bearing is located in the translational arm and the tie rod end. The spherical bearing is retrofitted by the manufacturer into the translation arm, and is already provided in the tie rod end. At the end of the tie rod end, there is a helix-shaped external thread from the end of the pin to the pin at a length predetermined by the manufacturer. By rotating the output shafts around their axis and moving the second external threads on the second internal threads of the second external threads, the horizontal distance in the right and left directions between the first output shaft and the second output shaft, which are opposite each other, can be adjusted. After adjusting the horizontal distance, the coupler is assembled. The locking device is located on the tie rod end. After the tie rod end length adjustment is made, the length adjustment is fixed with the locking device and the length is not changed. There is a cylindrical body on the locking device. The cylindrical body is almost hollow cylindrical form. There are more than one protrusion on the cylindrical body. There are multiple protrusions extending outwards from the cylindrical body, facing towards each other and extending along the direction in which the cylindrical body extends. The cylindrical body is provided with at least one locking plate, at least partly in the form of a spring, extending outwardly from the cylindrical body and having an opening in the form of a hole. The tie rod end is provided with at least one lock nut, which is a nut with a locking function. The locking nut is installed by turning the cylindrical body from the side of the cylindrical body facing the spherical bearing side so that it contacts the cylindrical body. The locking wire is in the form of a wire. The locking wire is passed through the holes drilled through the locking plate and lock nut to ensure that the length adjustment remains constant.

In one embodiment of the invention, the power transmission mechanism comprises a longitudinally extending hollow bushing having a wall thickness predetermined by the manufacturer. The bushing is located between the trigger shaft and the guide, between the output shaft and the guide, and between the reversible shaft and the guide. One of the bushings is a first bushing which is flanged on one side. The first bush is located between the trigger shaft and the guide, between the output shaft and the guide and between the reversible shaft and the guide. The flange part of the first bushing is in contact with the guide. The other of the bushings is the second bushing, which is flanged on the other side with respect to the first bushing. The second bushing is located between the trigger shaft and the guide, between the output shaft and the guide and between the reversible shaft and the guide. The flange part of the second bushing is in contact with the guide. The output shaft passes through the gap between the first bushing and the second bushing. The first bushing and the second bushing are arranged consecutively in contact with each other. The flange portions of the first bushing and the second bushing face towards each other, the first bushing and the second bushing being mirror symmetrical with respect to the surface on which they contact each other.

In one embodiment of the invention, the power transmission mechanism preferably comprises a body, which is any part fixedly located on the aircraft. The trigger is a flight controller (joystick), preferably manually controlled by the pilot. The output component is preferably an aileron.

The power transmission mechanism realised to achieve the object of the present invention is shown in the accompanying figures;
Figure 1 - Perspective view of the power transmission mechanism.
Figure 2 - Front view of the power transmission mechanism, trigger, first output device and second output device in the rolling position (I).
Figure 3 - Front view of the powertrain, trigger, first output device and second output device in neutral position (II).
Figure 4 - Front view of the power transmission mechanism, trigger, first output device and second output device in reverse rolling position (III).

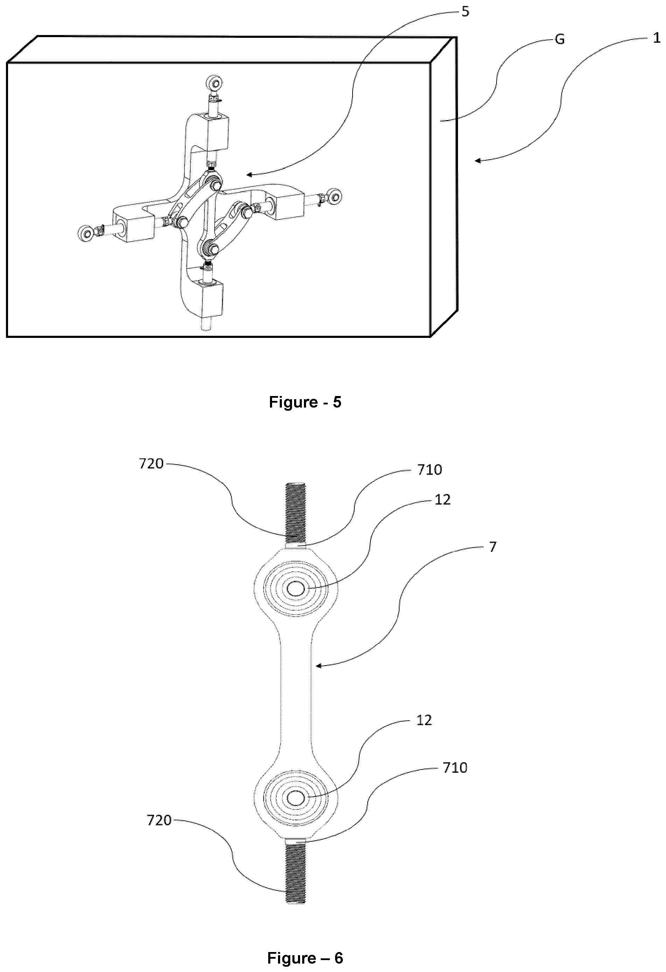

Figure 5 - Perspective view of the powertrain and body.
Figure 6 - Front view of the translational arm and ball joint.

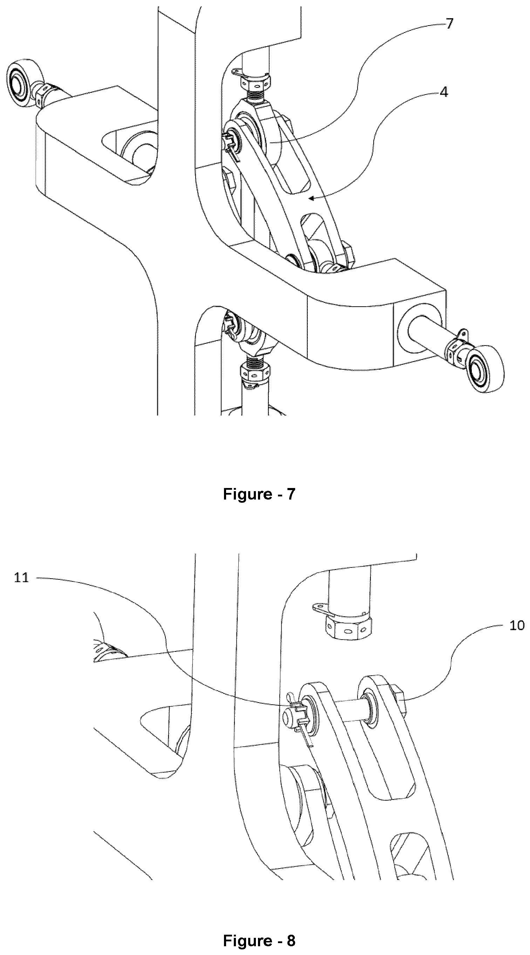

Figure 7 - Perspective view of the translational arm and rotary arm.
Figure 8 - Perspective view of the coupler and castle nut.

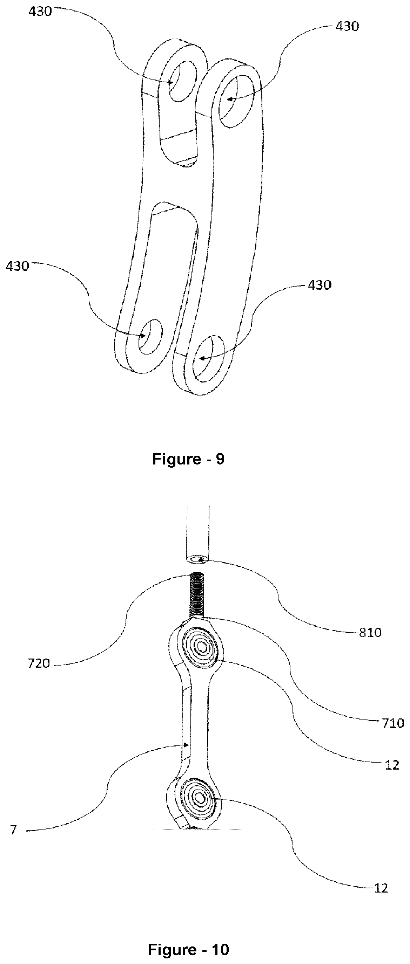

Figure 9 - Perspective view of the holes on the swivel arm.
Figure 10 - Exploded assembly view of translational arm and first internal thread.

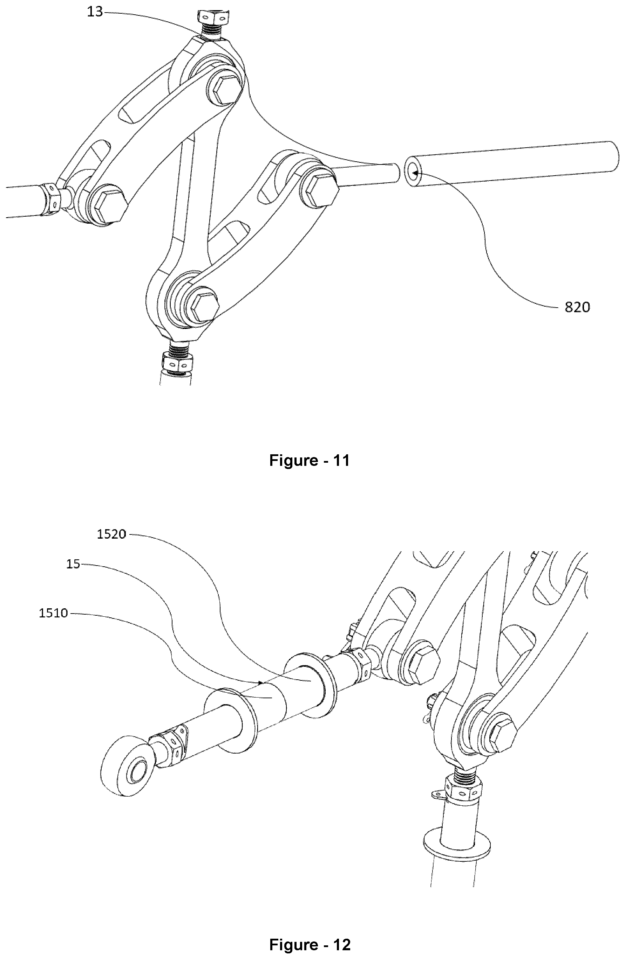

Figure 11 - Exploded assembly view of the second internal thread and second external thread.
Figure 12 - Perspective view of bushing, first bushing and second bushing.

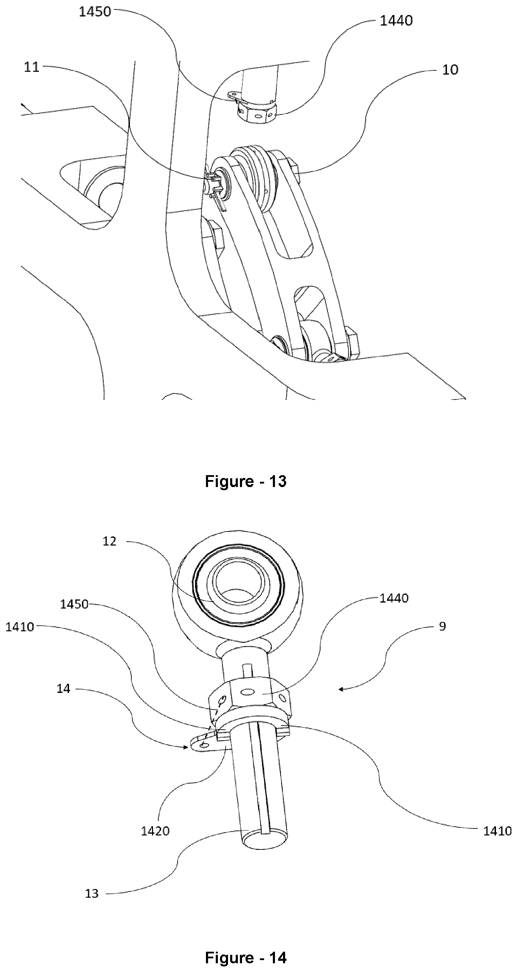

Figure 13 - Perspective view of coupler, castle nut, lock nut and locking wire.
Figure 14 - Perspective view of the tie rod end.

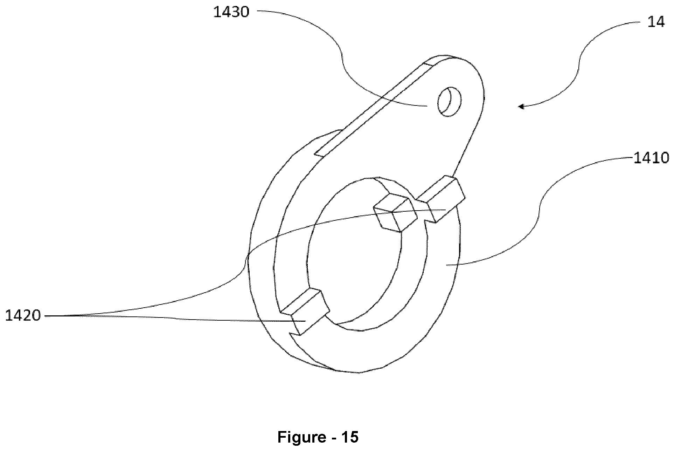

Figure 15 - Perspective view of the locking device.

The parts in the figures are numbered individually and the equivalents of these numbers are given below.
1. Power Transmission Mechanism
2. Trigger Shaft
3. Output Shaft
   310. First Output Shaft
   320. Second Output Shaft
4. Rotary Arm
   410. First Rotary Arm
   420. Second Rotary Arm
   430. Hole
5. Guide
   510. Guide Base
   520. Trigger Guide
   530. Output First Guide
   540. Output Second Guide
   550. Reversible Shaft Guide
   560. Trigger Opening
   570. Output First Opening
   580. Reversible Shaft Opening
   590. Output Second Opening
6. Reversible Shaft
7. Translational Arm
   710. Adjustment Pin
   720. First External Thread
8. Internal Thread Group
   810. First Internal Thread
   820. Second Internal Thread
9. Rod End
10. Connector
11. Castle Nut
12. Spherical Bearing
13. Second External Thread
14. Locking Device
   1410. Cylindrical Body
   1420. Ledge
   1430. Locking Plate
   1440. Lock Nut
   1450. Locking Wire
15. Bushing
   1510. First Bushing
   1520. Second Bushing

G. Body
A. Trigger
O. Output Component
K. First Output Component
L. Second Output Component
   I. Rolling Position
   II. Neutral Position
   III. Reverse Roll Position

The power transmission mechanism (1) comprises a body (G), a trigger (A) disposed on the body (G) which generates force and/or power, multiple output components (O) disposed on the body (G) to which the force and/or power generated by the trigger (A) is transferred, a trigger shaft (2) suitable for transmitting the force and/or power generated by the trigger (A), an output shaft (3) suitable for transmitting the force generated by the trigger (A) to the output component (O) via the trigger shaft (2), at least one rotary arm (4), which is a structural part providing force and/or power transmission between the trigger shaft (2) and the output shaft (3), at least one guide (5) located on the body (G), which has a groove in it to allow the trigger shaft (2) to move freely in linear direction (Figure - 1, Figure - 2, Figure - 3).

The power transmission mechanism (1) of the invention, comprising at least two output shafts (3), at least two output shafts (3) extending in different directions from each other, each of which is opposite the other, a guide (5) having a plurality of grooved extensions so as to allow the output shafts (3), each of which is opposite the other, to move freely linearly, one end connected to the trigger shaft (2) and the other end connected to the output shaft (3) in the form of a revolute joint, rotary arm (4) that allows the linear motion of the trigger shaft (2) to be transferred to each output shaft (3) as a linear motion in a direction different from the direction in which the trigger shaft (2) extends, thus allowing multiple output shafts (3) extending in different directions to be triggered by moving a single trigger shaft (2) (Figure - 1, Figure - 2, Figure - 3)

The guide (5) allows the force of the trigger shaft (2) to be transferred to the output shaft (3) at the desired force transmission ratios (Figure - 1, Figure - 2, Figure - 3).

With only one trigger shaft (2), it is possible to effectively transfer force by changing the direction of force to at least two output shafts (3) in the number specified by the manufacturer. According to the number of output shafts (3) and the directions of the output shafts (3) predetermined by the manufacturer, the number of arms of the guide (5) design and the directions in which the arms extend are changed to be the same number and in the same directions, so that the output shafts (3) can transfer force in the desired number and desired directions (Figure - 1, Figure - 2, Figure - 3, Figure - 4, Figure - 5).

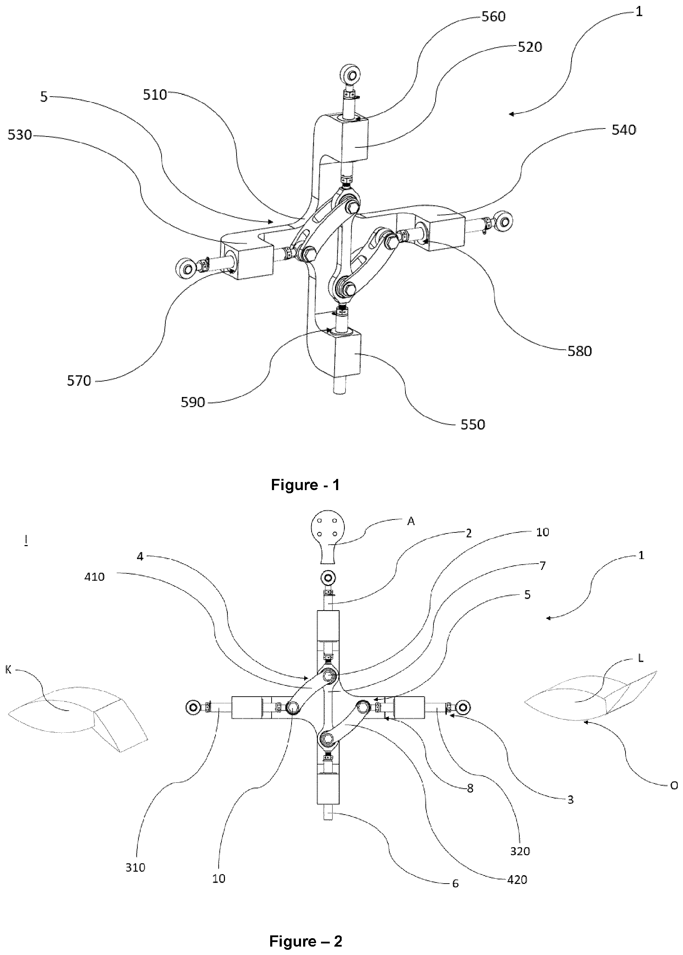

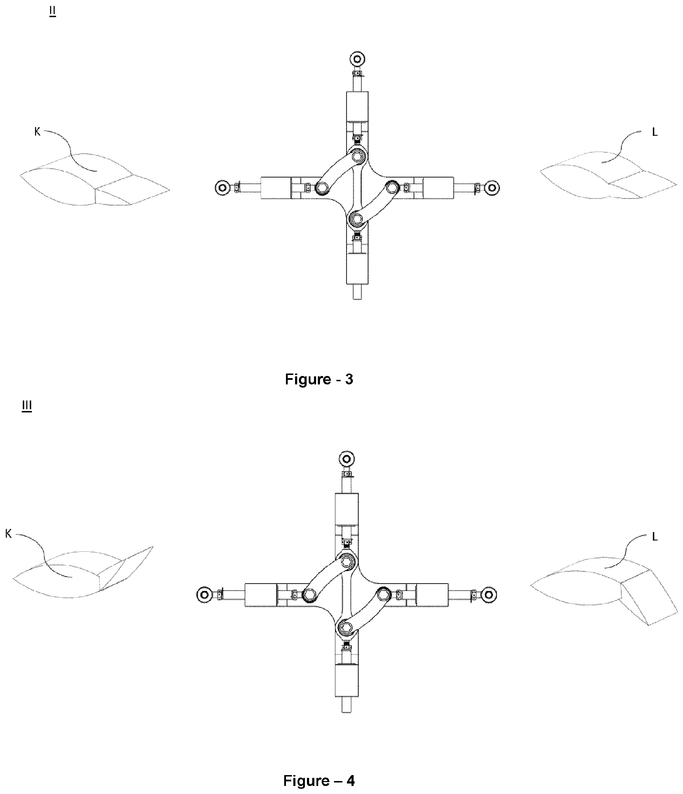

In one embodiment of the invention, the power transmission mechanism (1) comprises a first output component (K) having an output component (O) disposed on the body (G), a second output component (L) having an output component (O) disposed on the body (G) such that the first output component (K) and a second output component (L) are spaced apart and opposed, the force generated by the trigger (A) being transmitted to the first output component (K) by means of the trigger shaft (2), a first output shaft (310) having an output shaft (3), a second output shaft (320) having an output shaft (3), which transfers the force generated by the trigger (A) to the second output component (L) by means of the trigger shaft (2), a second output shaft (320) having an output shaft (3) located opposite the first output shaft (310) at a distance from the first output shaft (310), a guide base (510) located on the guide (5), extending outwardly from the guide base (510), a trigger guide (520) in which the trigger shaft (2) is freely linearly movable and rotatable, an output first guide (530) extending outwardly from the guide base (510), in which the first output component (K) is freely linearly movable and rotatable, spaced apart from the trigger guide (520), and extending in a direction different from the direction in which the trigger guide (520) extends, An output second guide (540) extending outwardly from the guide base (510) and allowing the second output component (L) to move freely linearly and rotate therein, which is located substantially opposite the output first guide (530) so as to maintain a distance from the output first guide (530), a first rotary arm (410) and a second rotary arm (420), at least one end of which is connected in the direction along which it extends in the form of a rotary joint. With only one trigger shaft (2), the first output shaft (310) and the second output shaft (320) are simultaneously triggered by a change of direction of the force (Fig. 1, Fig. 4).

In one embodiment of the invention, the power transmission mechanism (1) comprises at least one reversible shaft (6) spaced apart from the trigger shaft (2) so as to be coaxial with the direction along which the trigger shaft (2) extends, extending outwardly from the guide base (510), in which the reversible shaft (6) can freely move linearly and rotate, at least one reversible shaft guide (550) spaced apart from the trigger guide (520) and located substantially opposite each other, spaced apart from the trigger guide (520) so as to be coaxial with the direction along which the trigger guide (520) extends, at least one translational arm (7), connected at one end to the trigger shaft (2) and at the other end to the reversible shaft (6), extending along its length, for transferring the linear movement of the trigger shaft (2) to the reversible shaft (6), the first rotary arm (410), connected at one end to the trigger shaft (2) and at the other end to the first output shaft (310), a second rotary arm (420), one end of which is connected to the reversible shaft (6) and the other end of which is connected to the second output shaft (320), thereby enabling the first output shaft (310) and the second output shaft (320) to move in the same direction in the direction along which they extend. In the alternative embodiment of the present invention, pushing the trigger shaft (2) causes the first output shaft (310) to be pushed and the second output shaft (320) to be pulled. The reason why the second output shaft (320) is pulled is that the translational arm (7) is selected long enough so that the end of the translational arm (7) which is distant from the trigger shaft (2) is lower than the second output shaft (320). In this way, pushing the trigger shaft (2) causes the reversible shaft (6) to be pushed downwards. The reversible shaft (6) pushed downwards causes the second output shaft (320) to be pulled by means of the second rotary arm (420). The translational arm (7) is arranged in a form that narrows towards the centre from the end points where it is connected to the trigger shaft (2) and the reversible shaft (6), so that it moves in such a way that there is a distance between it and the first rotary arm (410) in the rolling position (I) and the second rotary arm (420) in the neutral position (II) (Figure - 1, Figure - 2, Figure - 3).

In one embodiment of the invention, the power transmission mechanism (1) comprises a rotary arm (4) which allows the first output shaft (310) and the second output shaft (320) to move in opposite directions in the direction in which they extend along the length of the first output shaft (310) and the second output shaft (320), thanks to the first rotary arm (410) and the second rotary arm (420), one end of which is connected to the trigger shaft (2) and the other end of which is connected to the first output shaft (310) and the second output shaft (320) respectively. The alternative embodiment of the present invention may be utilised where it is desired that the first output component (K) and the second output component (L) rotate in the same direction. One end each of the first output shaft (310) and the second output shaft (320) is connected to the trigger shaft (2). In this case, pushing the trigger shaft (2) causes the first output shaft (310) and the second output shaft (320) to push away from each other, and pulling the trigger shaft (2) causes the first output shaft (310) and the second output shaft (320) to pull closer to each other (Figure - 1, Figure - 2, Figure - 3).

In one embodiment of the invention, the power transmission mechanism (1) comprises an output first guide (530) and an output second guide (540) extending substantially perpendicular to the trigger guide (520), and a first output shaft (310) and a second output shaft (320) extending substantially perpendicular to the trigger shaft (2). Thanks to these perpendicular positions, force transmission and force redirection are achieved with relatively low forces in a more compact area, and the system is light and stable (Figure 1, Figure 4).

In one embodiment of the invention, the power transmission mechanism (1) comprises an output first guide (530) and an output second guide (540) extending perpendicularly to the trigger guide (520) so as to be in-plane, and a first output shaft (310) and a second output shaft (320) extending almost perpendicularly to the trigger shaft (2) so as to be in-plane. Thanks to the form of the guide (5) in the same plane, out-of-plane force and/or moment generation during the operation of the invention is prevented and the bearing of the system is facilitated (Figure - 1, Figure - 4).

In one embodiment of the invention, the power transmission mechanism (1) comprises a trigger shaft (2), an output shaft (3) and a reversible shaft (6) in hollow cylindrical form, the trigger shaft (2), the output shaft (3) and the reversible shaft (6) having an internal thread group (8) arranged as a helix-shaped recess in the inner periphery thereof, a first internal thread (810) which is an internal thread located on the inner wall of the trigger shaft (2) and the reversible shaft (6), a second internal thread (820) which is an internal thread located on the inner wall of the output shafts (3), at least one adjusting pin (710) of substantially cylindrical form, located on the translational arm (7) so as to extend outwardly from its ends in the direction in which the translational arm (7) extends along its length, the adjusting pins (710) being located on the adjustment pins (710), A first external thread (720) having a helical recess on the outer wall of the adjusting pins (710) comprises a translational arm (7), the length of which is changed in the trigger shaft (2) and the reversible shaft (6) by rotating the first external thread (720) around its axis and moving the first external thread (720) in the first inner thread (810). By adjusting the position of the translational arm (7) in the trigger shaft (2), the position of the trigger shaft (2) and the reversible shaft (6) relative to each other can be changed. The aforementioned change in length allows the stresses to which the rotary arm (4) will be subjected to be changed and provides ease of assembly for easy insertion of the first output shaft (310) into the output first opening (570) and the second output shaft (320) into the output second opening (590) (Figure - 6, Figure - 10, Figure - 11).

In one embodiment of the invention, the power transmission mechanism (1) is arranged so that the power transmission mechanism (1) passes through at least one tie rod end (9), hole (430) and rod end (9), which are rotatably mounted to the second internal thread (820), which is a rod end type joint, through a plurality of holes (430), holes (430) and tie rod ends (9), which are located as openings along the thickness direction of the rotary arm (4) in close proximity to the trigger shaft (2) and output shaft (3) of the rotary arm (4), It comprises a connector (10) for allowing the rod end (9) to rotate about the direction along which the hole (430) extends, at least one castle nut (11) for limiting the movement of the connector (10) in the direction along which it extends by means of a cotter pin, and a rotary arm (4) having a clevis joint structure with a double-arm extension so as to encircle the trigger shaft (2) and the output shaft (3) on opposite sides. The castle nut (11) ensures that the connector (10) remains in the rotary arm (4). The connector (10) is secured on one side by the head of the connector (10) and on the other side by the castle nut (11). The rotary arm (4) can move on the connector (10) in such a way as to compensate for relatively small angular movements due to the free rotation of the rod end (9) as a spherical joint. The rotary arm (4) has a geometry in the form of a rectangular prism with a double plate-like structure and an empty inner side in order to be light and exposed to low stress (Figure - 7, Figure - 8, Figure - 9).

In one embodiment of the invention, the power transmission mechanism (1) comprises a rolling position (I) in which the output components (O) are rotated in opposite directions to each other and are provided to move the body (G) at a rolling angle predetermined by the manufacturer, the body (G) being at a rolling angle of zero degrees, a neutral position (II) in which the first rotary arm (410) moves away from the trigger (A) and towards the first output component (K) relative to the rolling position (I), and the second rotary arm (420) moves away from the trigger (A) and away from the second output component (L) relative to the rolling position (I), wherein the output components (O) rotate at opposite angles to each other to move the body (G) in a direction opposite to the direction of rolling movement in the rolling position (I) predetermined by the manufacturer, wherein the first rotary arm (410) moves away from the trigger (A) relative to the neutral position (II) and approaches towards the first output component (K), A reverse rolling position (III) in which the second rotary arm (420) moves away from the trigger (A) relative to the rolling position (I) and away from the second output component (L), comprising a rotary arm (4) having a curved form, whereby the trigger guide (520), the output first guide (530), the output second guide (540) and the reversible shaft guide (550) are spaced apart between the rolling position (I) and the reverse rolling position (III). Preferably, only one trigger shaft (2) is used to cause the first output component (K) and the second output component (L) to rotate in opposite directions relative to each other (Figure 1, Figure 2, Figure 3).

In one embodiment of the invention, the power transmission mechanism (1) comprises a trigger opening (560), which is arranged as a longitudinal channel on the trigger guide (520), in which the trigger shaft (2) is movably disposed, an output first opening (570), which is arranged as a longitudinal channel on the output first guide (530), in which the output first shaft (310) is movably disposed, a reversible shaft opening (580), which is arranged as a longitudinal channel on the reversible shaft guide (550), in which the reversible shaft (6) is movably located, and an output second opening (590), which is arranged as a longitudinal channel on the output second guide (540), in which the second output shaft (320) is movably located (Figure - 4).

In one embodiment of the invention, the power transmission mechanism (1) comprises at least one spherical bearing (12), the centre of which is a pivot joint rotatably arranged about a point, arranged in a translational arm (7) and a tie rod end (9), and a second external thread (13) arranged at the cylindrical end point of the tie rod end (9), the outer periphery of which is recessed in a helical recess, a connector (10) for adjusting the distance between the first output shaft (310) and the second output shaft (320), which are opposite each other by rotating the output shafts (3) about their axis and moving the second external thread (13) on the second internal thread (820), located on the tie rod end (9). A locking device (14) for locking the tie rod end (9) after length adjustment, a cylindrical body (1410) of substantially cylindrical form disposed on the locking device (14), a plurality of protrusion (1420) on the cylindrical body (1410) extending outwardly from the cylindrical body (1410), which are opposite each other. The cylindrical body (1410) includes at least one locking plate (1430) having an opening extending outwardly from the cylindrical body (1410), at least one lock nut (1440) being a nut located on the tie rod end (9), and at least one locking wire (1450) being a wire for locking by passing through openings in the locking plate (1430) and lock nut (1440). The locking wire (1450) is passed through the opening in the locking plate (1430) and the opening in the lock nut (1440) to lock the locking plate (1430) and the locking wire (1450) together (Figure - 13, Figure - 14, Figure - 15).

In one embodiment of the invention, the power transmission mechanism (1) comprises a plurality of bushes (15) of substantially cylindrical form, arranged between each of the trigger shaft (2), the trigger shaft (2), the output shaft (3) and the reversible shaft (6) and the guide (5), arranged between each of the trigger shaft (2), the output shaft (3) and the reversible shaft (6) and the guide (5), a first bushing (1510) having a flange structure extending outwardly from one end, a second bushing (1520) having a flange structure extending outwardly from one end, having a substantially cylindrical form, having a flange structure extending outwardly from one end, located between each of the trigger shaft (2), the output shaft (3) and the reversible shaft (6) and the guide (5), and located one behind the first bushing (1510) and/or conjugate with the first bushing (1510). The bushing (15) allows the trigger shaft (2), the output shaft (3) and the reversible shaft (6) to operate with minimum friction between them and the guide (5). In case of wear of the bushes (15), the bushes (15) can be replaced with new bushes (15). The flange parts of the bushes (15) are preferably placed so that the bushes (15) are mirror symmetrical with respect to each other (Figure - 12).

In one embodiment of the invention, the power transmission mechanism (1) comprises a body (G), a trigger (A) for flight control, and an output component (O) which is an aileron.

The body (G) can be the fixed part of the system where any force and/or power transfer is desired on the aircraft. The trigger (A) is preferably the flight controller used by the pilot to control the aircraft, but can be any actuator that can be triggered automatically. The output component (O) is preferably the aileron, but can be any component that is intended to move (Figure 1).

## Claims

1. A power transmission mechanism (1), **comprising** a body (G), a trigger (A) located on the body (G), generating force and/or power, multiple output components (O) located on the body (G) to which the force and/or power generated by the trigger (A) is transferred, a trigger shaft (2) suitable for transferring the force and/or power generated by the trigger (A), an output shaft (3) suitable for transferring the force generated by the trigger (A) to the output component (O) via the trigger shaft (2), at least one rotary arm (4), which is a structural part that provides force and/or power transmission between the trigger shaft (2) and the output shaft (3), at least one guide (5) on the body (G), which has a groove in it to allow the trigger shaft (2) to move freely in linear direction, **characterized by** at least two output shafts (3) extending in different directions from each other, each of which is located opposite to the other, guide (5) with multiple grooved extensions, each of which is located in such a way as to allow free linear movement of the output shafts (3) opposite one another, a rotary arm (4) one end of which is connected to the trigger shaft (2) and the other end to the output shaft (3) in the form of a rotary joint, which allows the linear motion of the trigger shaft (2) to be transferred to each output shaft (3) as linear motion in directions different from the direction in which the trigger shaft (2) extends, that allows multiple output shafts (3) extending in different directions to be triggered by moving a single trigger shaft (2).

2. A power transmission mechanism (1) according to claim 1, **characterized by** a first output component (K) with output component (O) located on the body (G), a second output component (L) with output component (O), located on the body (G) at a distance from and opposite to the first output component (K), a first output shaft (310) having an output shaft (3) which transfers the force generated by the trigger (A) to the first output component (K) via the trigger shaft (2), a second output shaft (320) having an output shaft (3), which transmits the force generated by the trigger (A) to the second output component (L) by means of the trigger shaft (2), the output shaft (3) being located opposite the first output shaft (310) at a distance from the first output shaft (310), a guide base (510) located on the guide (5), a trigger guide (520) extending outwardly from the guide base (510), in which the trigger shaft (2) can freely move linearly and rotate, an output first guide (530) extending outwardly from the guide base (510), allowing free linear movement and rotation of the first output component (K) therein, spaced from the trigger guide (520), extending in a direction different from the direction in which the trigger guide (520) extends, an output second guide (540) extending outwardly from the guide base (510), in which the second output component (L) can freely move linearly and rotate, the output second guide (540) being located substantially opposite the output first guide (530) so as to be spaced from the output first guide (530), a first rotary arm (410) and a second rotary arm (420), at least one end of which is connected in the form of a pivoting joint in the direction along which it extends.

3. A power transmission mechanism (1) according to claim 2, **characterized by** at least one reversible shaft (6) spaced at a distance from the trigger shaft (2) so as to be coaxial with the direction along which the trigger shaft (2) extends, at least one reversible shaft guide (550) extending outwardly from the guide base (510), in which the reversible shaft (6) can freely move linearly and rotate, spaced from the trigger guide (520) and located substantially opposite each other, spaced from the trigger guide (520) so as to be coaxial with the direction along which the trigger guide (520) extends, at least one translational arm (7), connected at one end to the trigger shaft (2) and at the other end to the reversible shaft (6), extending along its length and enabling the linear motion of the trigger shaft (2) to be transferred to the reversible shaft (6), first rotary arm (410) with one end connected to the trigger shaft (2) and the other end connected to the first output shaft (310), connected to the reversible shaft (6) and the other end is connected to the second output shaft (320), the second rotary arm (420) allowing the first output shaft (310) and the second output shaft (320) to move in the same direction in their longitudinal direction.

4. A power transmission mechanism (1) according to claim 2 or claim 3, **characterized by** a rotary arm (4), connected to one end of each of the connected ends to the trigger shaft (2) and the other ends to the first output shaft (310) and second output shaft (320) respectively, enabling the first output shaft (310) and the second output shaft (320) to move in opposite directions along their respective lengths.

5. A power transmission mechanism (1) according to claim 2 to claim 4, **characterized by** the output first guide (530) and the output second guide (540) extending substantially perpendicularly to the trigger guide (520), the first output shaft (310) and the second output shaft (320) extending substantially perpendicularly to the trigger shaft (2).

6. A power transmission mechanism (1) according to claim 2 to claim 5, **characterized by** the output first guide (530) and the output second guide (540) extending perpendicularly to the trigger guide (520) so as to be in the same plane, and the first output shaft (310) and the second output shaft (320) extending substantially perpendicularly to the trigger shaft (2) so as to be in the same plane.

7. A power transmission mechanism (1) according to claim 3 to claim 6, **characterized by** the trigger shaft (2), output shaft (3) and reversible shaft (6) in hollow cylindrical form, an internal thread group (8) located as a helix-shaped recess in the inner wall of the trigger shaft (2), output shaft (3) and reversible shaft (6), a first internal thread (810) which is an internal thread located on the inner wall of the trigger shaft (2) and the reversible shaft (6), a second internal thread (820), which is an internal thread located on the inner wall of the output shafts (3), at least one adjusting pin (710) of substantially cylindrical form, disposed on the translational arm (7) so as to extend outwardly from its ends in the direction along which the translational arm (7) extends, a first external thread (720) disposed on the adjusting pins (710), having a helical recess on the outer periphery of the adjusting pins (710), the trigger shaft (2) and the translational arm (7) whose length is changed in the reversible shaft (6) by means of moving the first external thread (720) in the first inner thread (810) by rotating them about their axis.

8. A power transmission mechanism (1) according to claim 7, **characterized by** a plurality of holes (430) located at the ends of the rotary arm (4) close to the trigger shaft (2) and the output shaft (3), as a through opening along the thickness direction of the rotary arm (4), at least one tie rod end (9) with a joint of the rod end, rotationally mounted on the second internal thread (820), a connector (10) which, by passing through the hole (430) and the tie rod end (9), enables the tie rod end (9) to rotate about the direction in which the hole (430) extends along its length, at least one castle nut (11) limiting the movement of the connector (10) in the direction along which it extends by means of a cotter pin, the rotary arm (4) has a clevis articulated structure with a double-arm extension so as to encircle the trigger shaft (2) and the output shaft (3) on opposite sides.

9. A power transmission mechanism (1) according to claim 3 to claim 8, **characterized by** a rolling position (I) in which the output components (O) are rotated in opposite directions and the body (G) is moved at a rolling angle predetermined by the manufacturer, a neutral position (II) in which the body (G) is at a roll angle of zero degrees, the first rotary arm (410) moves away from the trigger (A) relative to the roll position (I) towards the first output component (K), the second rotary arm (420) moves away from the trigger (A) relative to the roll position (I) away from the second output component (L), a reverse rolling position (III) in which the output components (O) rotate at opposite angles to each other to move the body (G) in a direction opposite to the rolling direction of movement predetermined by the manufacturer and determined by the manufacturer in the rolling position (I), the first rotary arm (410) moves away from the trigger (A) relative to the neutral position (II) and approaches towards the first output component (K), the second rotary arm (420) moves away from the trigger (A) relative to the rolling position (I) and moves away from the second output component (L), the rotary arm (4) having a curved form, whereby it moves between the rolling position (I) and the reverse rolling position (III) by maintaining a distance between the trigger guide (520), the output first guide (530), the output second guide (540) and the reversible shaft guide (550).

10. A power transmission mechanism (1) according to claim 3 to claim 9, **characterized by** a trigger opening (560), which is a longitudinal channel on the trigger guide (520), in which the trigger shaft (2) is movably located, an output first opening (570) disposed as a longitudinal channel on the output first guide (530), in which the output first shaft (310) is movably disposed, a reversible shaft opening (580), which is a longitudinal channel on the reversible shaft guide (550), in which the reversible shaft (6) is movably located, the output second guide (540), an output second opening (590) disposed as a longitudinal channel on the output second guide (540), in which the second output shaft (320) is movably disposed.

11. A power transmission mechanism (1) according to claim 8 to claim 10, **characterized by** at least one spherical bearing (12) located in the translational arm (7) and tie rod end (9), the centre of which is a joint rotatably located around a point, a second external thread (13) located at the cylindrical end point of the tie rod end (9), with a helix-shaped recess in its outer periphery, a connector (10) for adjusting the distance between the first output shaft (310) and the second output shaft (320), which remain opposite each other by rotating the output shafts (3) about their axis and moving the second external thread (13) on the second internal thread (820), a locking device (14) located on the tie rod end (9) for locking the tie rod end (9) after length adjustment, a cylindrical body (1410) of substantially cylindrical form, disposed on the locking device (14), multiple protrusions (1420) opposing each other on the cylindrical body (1410), extending outward from the cylindrical body (1410), at least one locking plate (1430) disposed on the cylindrical body (1410), extending outwardly from the cylindrical body (1410) and having an opening, at least one lock nut (1440) which is the nut located on the tie rod end (9), at least one locking wire (1450) is at least one locking wire (1450), the wire being threaded through openings in the locking plate (1430) and the lock nut (1440) to enable locking.

12. A power transmission mechanism (1) according to claim 3 to claim 11, **characterized by** multiple bushes (15) of substantially cylindrical form, located between the trigger shaft (2), the output shaft (3) and each of the reversible shaft (6) and the guide (5), a first bushing (1510) having a flange structure extending outwardly from one end, of substantially cylindrical form, located between each of the trigger shaft (2), the output shaft (3) and the reversible shaft (6) and the guide (5), a second bushing (1520) located between the trigger shaft (2), the output shaft (3) and each of the reversible shaft (6) and the guide (5), having an almost cylindrical shape, having a flange structure extending outwards from one end, located one after the other with the first bushing (1510) and/or conjugate with the first bushing (1510).

13. A power transmission mechanism (1) according to any one of the preceding claims, **characterized by** the body (G on the aircraft, the trigger (A) which is the flight controller, the output component (O) which is the aileron.
